# EUROPEAN PATENT APPLICATION

(11) **EP 4 847 457 A1**
(43) Date of publication of application: **02.12.2026**
(21) Application number: 25179862.5
(22) Date of filing: 30.05.2025
(51) Int. Cl.: C03B 37/012, C03B 37/027

(54) **CANE INTERFACE FOR PRESSURIZATION OF OPTICAL FIBER**

(71) Applicant: Microsoft Technology Licensing, LLC, Redmond, WA 98052 (US); University Of Southampton, Southampton SO17 1BJ (GB)
(72) Inventor: APPLEYARD, Andrew Paul, Redmond, 98052-6399 (US); SANDOGHCHI, Seyed Reza, Redmond, 98052-6399 (US); AMOUZAD MAHDIRAJI, Ghafour, Southampton (GB); PETROVICH, Marco, Redmond, 98052-6399 (US); POLETTI, Francesco, Southampton, SO17 1BJ (GB)
(74) Representative: CMS Cameron McKenna Nabarro Olswang LLP

(57) **Abstract**

A method of manufacturing a hollow core optical fiber cane pressure interface and an optical fiber cane pressure interface. The optical fiber cane pressure interface comprising a first end and a second end, the first end comprising a section of optical fiber preform 602p, and the second end comprising a section of optical fiber cane 602ii; and a plurality of capillaries extending from the first end to the second end of the pressure interface.

## Description

### BACKGROUND

Optical fibers may be formed in glass or another material by drawing the optical fiber from a cane or a preform in a drawing tower. In a drawing tower, a cane or preform is heated and slowly pulled, elongating it. The resulting optical fibers have a smaller diameter than that of the cane or preform, and an inner microstructure that matches that of the cane, albeit at a reduced scale. A cane may be produced by drawing a cane preform, using a similar drawing process. During a drawing process, an act of heating, pulling and/and cooling a cane may result in deformations in an optical fiber which can affect the quality of a resultant optical fiber.

### SUMMARY

The following presents a simplified summary of the disclosure to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

A first aspect relates to a hollow core optical fiber cane pressure interface comprised of optical fiber material. The pressure interface comprising: a first end and a second end, the first end comprising a section of optical fiber preform, and the second end comprising a section of optical fiber cane; and a plurality of capillaries extending from the first end to the second end of the pressure interface.

A second aspect relates to a method of manufacturing a hollow core optical fiber cane pressure interface. The method comprising: receiving a length of hollow core optical fiber material, the optical fiber material having a plurality of capillaries extending along its length, a first end of the optical fiber material comprising a section of optical fiber preform, and a second end of the optical fiber material comprising a section of optical fiber cane; and dividing the length of optical fiber material leaving a pressure interface having a first end and a second end, the first end comprising a section of optical fiber preform, and the second end comprising a section of optical fiber cane.

The method and apparatus disclosed herein offer flexibility in terms of cane size and shape that a pressure interface may be applied to, and also flexibility in the arrangement of structures within canes, such as capillaries, that may be interfaced with in order to pressurize the structures within canes. The methods may be fully or partially automated to increase preform or cane drawing speed. Furthermore, by accurate pressurization of capillaries and/or other cane structures, there is an increase in yield of high-quality optical fibers that reduces wastage. A direct access to each cane structure using the interface allows complex pressurization requirements of the structures during drawing (i.e., allowing for different amounts of pressure to be applied to the internal capillaries as required, such as, for example, an innermost nested capillary being supplied by the highest pressure).

Many of the attendant features will be more readily appreciated as the same becomes better understood by reference to the following detailed description considered in connection with the accompanying drawings.

### BRIED DESCRIPTION OF THE DRAWINGS

The present description will be better understood from the following detailed description read in light of the accompanying drawings, wherein:
FIGs. 1-3 show transverse cross-sectional views of three different examples of anti-resonant hollow core fibers.
FIG. 4 illustrates an example cane face.
FIG. 5 illustrates the example cane face of FIG. 4 with exemplary pressurization points indicated.
FIG. 6 illustrates steps for manufacturing a cane interface and its use to manufacture optical fiber.
FIG. 7 illustrates cross-sections of a pressure interface and a cane.
FIG. 8 illustrates a partially transparent pressure interface.
FIG. 9 illustrates a flowchart of a method for manufacturing a pressure interface.
FIG. 10 illustrates a flowchart of a method for using a pressure interface.
Reference numerals are used throughout the description to designate parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

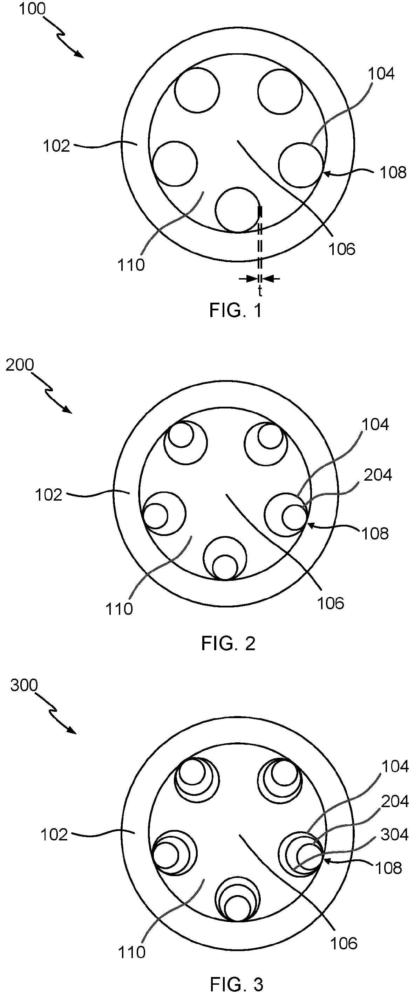

FIGs. 1-3 illustrate transverse cross-sectional views of three different examples of antiresonant hollow core fibers (ARFs). The illustrated fibers each show their respective inner capillary structures. Light is guided in these fibers by an antiresonant optical effect. Each of the fibers 100, 200, 300 comprises a tubular outer cladding (or jacket) 102, a structured, inner, cladding comprising a plurality of tubular cladding capillaries 104, 204, 304 and a hollow core 106. The outer cladding 102 has a glass thickness that is typically much larger than that of the cladding capillaries 104, 204, 304. In the first example, illustrated in FIG. 1, the structured, inner, cladding comprises five capillaries 104 of the same cross-sectional size and shape, which are arranged inside the outer cladding 102 in a single ring so that the longitudinal axes of each cladding capillary 104 and of the outer cladding 102 are substantially parallel. Each cladding capillary 104 is in contact with (e.g. bonded to) the inner surface of the outer cladding 102 at an azimuthal location 108, such that the cladding capillaries 104 are evenly spaced around the inner circumference of the outer cladding 102 and are also spaced apart from each other by gaps 110 (i.e. such that there is no contact between neighboring capillaries). In some designs of ARF, the cladding capillaries 104 may be positioned in contact with each other (in other words, not spaced apart as in FIG. 1), but spacing to eliminate this contact can improve the fiber's optical performance. The gaps 110 remove nodes that arise at the contact points between adjacent tubes, and which tend to cause undesirable resonances that result in high losses. Accordingly, fibers with spaced-apart cladding capillaries may be referred to as "nodeless antiresonant hollow core fibers".

The arrangement of the cladding capillaries 104 in a ring around the inside of the tubular outer cladding 102 creates a central space, cavity, or void within the fiber, also with its longitudinal axis parallel to those of the outer cladding 102 and the cladding capillaries 104, which is the fiber's hollow core 106. The hollow core 106 is bounded by the inwardly facing parts of the outer surfaces of the cladding capillaries 104. This is the core boundary, and the material (glass or polymer, for example) of the capillary walls that make up this boundary provides the required antiresonance optical guidance effect or mechanism. The cladding capillaries 104 have a thickness, t, at the core boundary which defines the wavelength for which antiresonant optical guiding occurs in the ARF.

In the second example, illustrated in FIG. 2, each primary cladding capillary 104 has a secondary, smaller capillary 204 nested inside it, bonded to the inner surface of the primary cladding capillary 104, in this example at the same azimuthal location 108 as the point of bonding between the primary cladding capillary 104 and the outer cladding 102. These additional smaller capillaries 204 can reduce the optical loss. ARF designs of this type, with secondary capillaries, may be referred to as "nested antiresonant nodeless fibers" (NANFs) (TM).

The third example, illustrated in FIG. 3, has two smaller cladding capillaries 204, 304 nested inside each cladding capillary 104. As with the example illustrated in FIG. 2, each of the smaller capillaries 204, 304 is bonded to the inner surface of the immediately larger capillary at the same azimuthal location as the point of bonding between the primary cladding capillary 104 and the outer cladding 102. In this example, the smaller capillary 304 may be referred to as the secondary cladding capillary and the smallest capillary 204 may be referred to as the tertiary cladding capillary. The tertiary cladding capillary 204 is bonded to the inner surface of the secondary cladding capillary 304 and the secondary cladding capillary 304 is bonded to the inner surface of the primary cladding capillary 104. ARF designs of this type, with secondary and tertiary cladding capillaries may be referred to as "double-nested antiresonant nodeless fibers" (DNANFs). In yet further examples (not shown in the drawings) there may be a different configuration or number of cladding capillaries and/or a different number of nested resonators. The examples disclosed herein may apply to hollow core fibers with an arbitrary number of nested resonators. For example, there may be smaller further capillaries, within the tertiary capillary 204 to provide further levels of nesting and/or there may be a plurality of secondary cladding capillaries within each primary cladding capillary, each secondary cladding capillary being bonded to the inner surface of the primary cladding capillary at a different azimuthal location and/or each primary cladding capillary may have an internal structure (e.g. one or more dividing walls).

A technique for manufacturing such ARFs (referred to herein as 'optical fibers' or simply 'fibers'), including the nested, double-nested and other multiply nested variants, is to use a preform. Preforms can be drawn into canes which can in turn be drawn into an optical fiber. In other words, the preform is a typically glass element that is used as basis for creating optical fiber. Preforms have matching internal structures to the resulting hollow core optical fiber but are larger scale (e.g. the diameter of a preform is on the scale of at least a few centimeters to a few tens of centimeters, while diameters of optical fibers may be on the micrometer scale, typically 80 microns to a few hundred microns). Cane preforms are typically manufactured by fusing together a plurality of glass tubes. This involves positioning the tubes that will form the structured inner cladding inside a tube that will form the tubular outer cladding and then applying heat to the outside of the tubular outer cladding at the point where the tubes are to be fused together, either partially or fully. Complete manufacturing of the preform involves multiple operations, e.g. to fuse each set of nested capillaries to the inner surface of the tubular outer cladding, to ensure complete fusion of the nested capillaries to the jacket tube along their length and to increase the volume of cladding glass by insertion of the cane into a secondary jacket tube. The tubular outer cladding may fuse partially or fully to the jacket in another process, or the tubular outer cladding may be fixed in their positions using other methods.

The preform is connected to a drawing system (e.g. a fiber drawing tower) and then heated and pulled slowly, which causes a narrowing and stretching effect on the part of the preform that is being pulled. The internal structure with regard to the internal capillaries is theoretically maintained after the drawing process. In various examples, the drawn preform is cut off the preform after it has been drawn in a drawing system, which produces separated canes. The drawing process may be repeated on the canes to produce fibers with the fiber structure varying dependent upon aspects occurring during the drawing process, such as, but not limited to, surface tension of the drawn material, heating variations, etc.

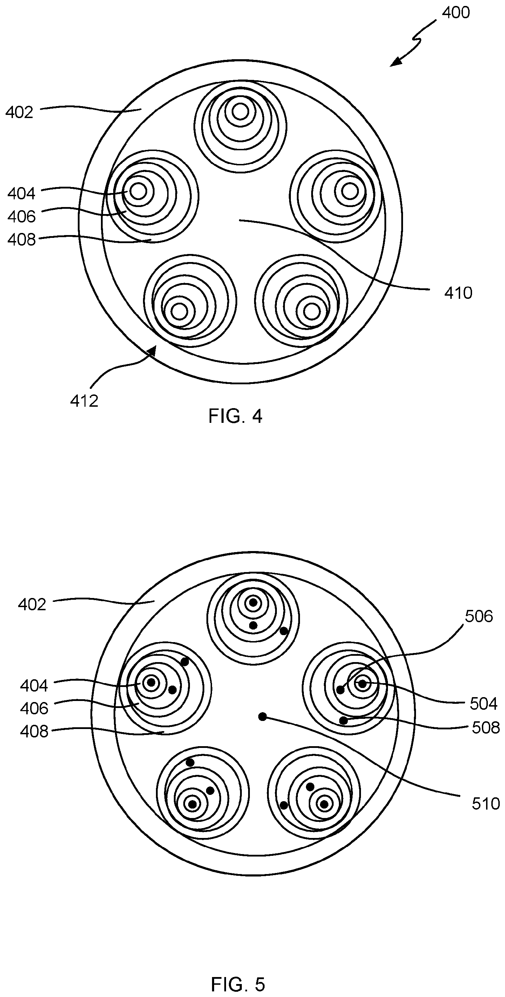

FIG. 4 illustrates an example of a cane face 400. The glass cladding 402, and internal nested capillaries (inner 404, middle 406 and outer 408) are shown, as well as the core 410.

As a hollow core preform is heated and drawn, effects such as surface tension and the pressure differences within the capillaries themselves lead to a deformation of the internal structure in the resultant cane or fiber, as the pressure differences act to close the fiber or cane. The deformation may be of the end face 400. A consequence of this is that the outer 408 and middle 406 capillaries in the internal nesting structure may have a non-round shape. There is also the risk of deformation of the overall outer glass cladding 402, which houses the internal capillaries 404, 406, 408. To produce an optical fiber, the cane must be drawn, and further deformation may occur. A deformed optical fiber is of lower quality, with a potential loss of resonance due to the new shape, which affects the light that will eventually travel down the resulting fibers. There is therefore a desire to pressurize a cane to ensure that there is no loss of shape/structure during drawing of the optical fiber. As a result of different levels of deformation and their sizes, the core 410 and each of the internal capillaries 404, 406, 408 of the cane 400 will ideally require differing amounts of pressurization to prevent collapse of the structure, which may be referred to as a failed draw.

Current methods of pressurization are techniques such as inflation, which is filling a cane with a fluid, such as a gas, to expand the capillaries and core of the cane during the drawing process to produce an optical fiber. This is performed using gas conduits that are placed into the capillaries. Common gases to use are inert gases, such as a noble gas. Owing to the cylindrical shape of a typical preform, cane or fiber, the gas used to pressurize enters at one end face of the cylinder. However, problems exist with these methods. Due to the different size of the capillaries in the nested elements of the internal capillaries within the canes (e.g. inner, middle and outer nesting), there is not a constant pressure across the face of the cane- Multiple different values of pressure may be required to be fed into different capillaries in order to inflate them and correct their deformation. For example, an innermost capillary will need more pressurization than a middle-nested capillary, which will in turn need more pressurization than an outer nested capillary. All nested capillaries will need more pressurization than the volume in the core 510 illustrated in Fig. 5. There is a great difficulty with being able to correctly apply the right amount of pressure within the individual capillaries and across the face of a cane, owing to the small sizes of the cane, meaning it is difficult to pressurize the individual capillaries. Furthermore, because of the relatively small size of a cane, the size of a gas conduit inserted into the cane will be small (e.g. 100 microns or less); using such gas conduits to provide the pressurization required is thus difficult, time consuming and prone to failure. In some examples, an approximate range of 5 to 20 kPa is provided to capillaries of a cane with an innermost capillary having a higher pressure than surrounding capillaries. An exemplary core pressure may be approximately 10kPa. While FIG. 4 illustrates an example cane with inner, middle and outer nested capillaries preform, it should be noted that this is an illustrative example. It is also possible to pressurize canes with less or more nesting, or where capillaries are not nested.

Hence, disclosed herein is a method and apparatus for pressurization of a cane during drawing into an optical fiber. There is provided an improved pressure interface that results in an improvement in quality of a drawn fiber. Features and advantages will be described in more detail herein. Providing pressurized gas/fluid to a hollow in optical fiber material increases in difficulty as the size of the hollow decreases, hence a cane pressure interface as described herein enables pressure to be provided to hollows of a cane using a pressure interfere with larger hollows able to more easily receive pressurized gas/fluid. In some examples, hollow conduits are used to provide pressurized gas/fluid to hollow parts of an end of an optical fiber preform material which has larger sized hollows than an optical fiber cane.

FIG. 5 illustrates the example cane face of FIG. 4 with exemplary pressurization points 504, 506, 508, 510 indicated with a black dot. In the figure, the core 410 and each of the internal capillaries 404, 406, 408 of the cane may be pressurized by the provision of gas sources at the required pressure in the respective pressurization points and every hollow part of a cane is pressurized to achieve the required expansion and to improve the quality and consistency of drawn optical fiber. In some examples, not every hollow part of a cane may be pressurized. In some examples, the use of a negative pressure outside the glass cladding 402 may be used in combination with positive pressure inside one or more hollow parts of the cane. FIG. 5 illustrates how small the space is between structures, i.e. capillaries, in the cane is - see, for example the limited space between the outer capillary 408 and the middle capillary 406 where the outer capillary pressurization point 508 must be provided. A core pressurization point 510 has the largest cross-sectional area within the core 410, but the nested capillaries 404, 406, 408 are far more difficult to pressurize due to their relatively small cross-sectional areas.

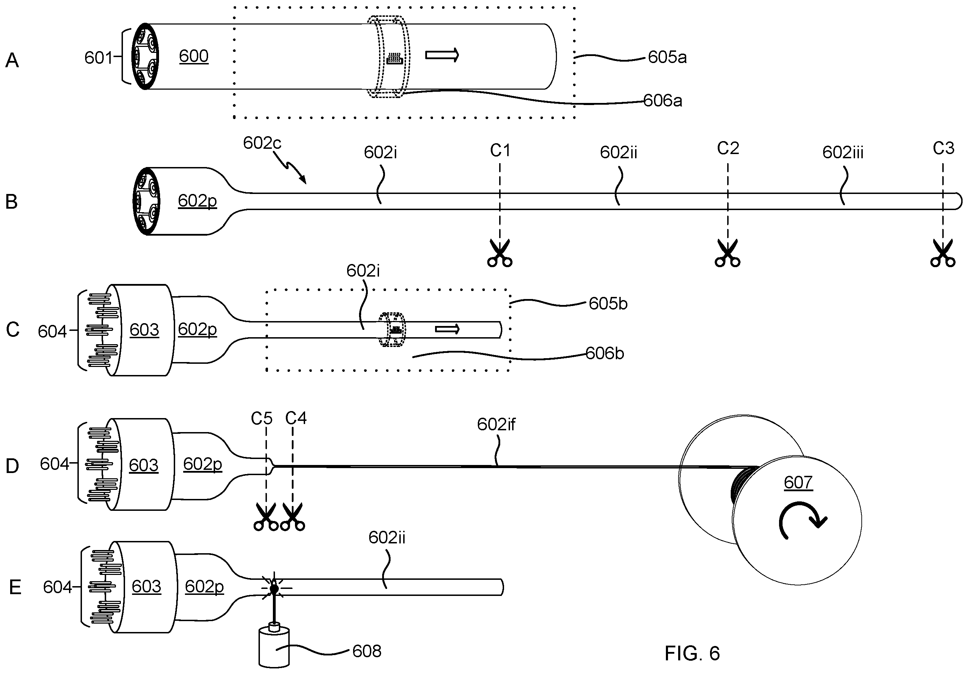

FIG. 6 illustrates steps A-E for manufacturing optical fiber cane pressure interface 602p and its use in manufacturing optical fiber 602if.

Key to FIG. 6:

| | | | |
|---|---|---|---|
| 600 | optical fiber preform | 603 | seal |
| 601 | internal structure of the optical fiber preform | 604 | conduits |
| 602p | optical fiber preform section | 605a | cane drawing device |
| 602c | cane section | 605b | fiber drawing device |
| 602i | first cane section | 606a | preform heat source |
| 602if | optical fiber length | 606b | cane heat source |
| 602ii | second cane section | 607 | optical fiber spool |
| 602iii | third cane section | 608 | splicing device |

Step A illustrates an optical fiber preform 600 with an inner structure 601 comprising a plurality of hollow structures, such as nested capillaries, extending longitudinally along the preform 600. There may also be a hollow core. Step A illustrates a drawing device 605 suitable for drawing the preform 600 in the direction indicated by a hollow arrow into an elongated form, such as a cane. The preform drawing device 605a is illustrated as including a preform heat source 606a for heating the preform 600 during the drawing process. The drawing device 605a is operable to draw part of the preform 600 into a cane leaving part of the preform 600 with its original cross-section that is referred to below as optical fiber preform section 602p.

Step B illustrates sections of the drawn cane 602c, attached to the optical fiber preform section 602p being divided/cleaved. A first cleave C1 being between a first cane section 602i and a second cane section 602ii. A second cleave C2 between the second cane section 602ii and a third cane section 602iii. A third cleave C3 between the third cane section 602iii and a further cane section or an end. The number of cleaves is purely for illustrative purposes and may vary. Cleaving may be performed by any suitable method, such as a scribing a small incision with a precision tool perpendicular to the longitudinal axis on the cane surface and then applying a lateral force to the free end of the cane whilst simultaneously providing a fulcrum support to the cane on the opposite side to the incision. The stress concentration at the incision point causes a crack to propagate resulting in cane separation. Alternatively, other cleaving methods may be applied to the cleaving, including sawing or laser cutting.

Step C illustrates first cane section 602i on the optical fiber preform section 602p. A seal 603 has been added to the optical fiber preform section at the end with a cross-section of optical fiber preform. The seal 603 stops fluid flow into hollow portions of the optical fiber preform section and the first cane section 602i, except via the conduits 604 passing through the seal that are in fluid communication with the hollow sections, which include internal structures of the optical fiber preform section and first cane section. The term capillary should be understood to mean any hollow structure extending longitudinally along a preform or cane. Gas or fluid may flow under pressure through one or more conduits and enter the first cane section. Exemplary gasses include noble gasses that can be used to pressurize one or more structures within a cane when drawing into an optical fiber. In the figure, all capillaries and central hollow section have an associated conduit, however in other examples, this may not be true with some hollow structures in a cane being not pressurized or pressurized by another method, such as, for example, making an axial hole in the optical fiber preform section to pressure the central hollow section.

Step C also illustrates a 605b fiber drawing device that is operable to draw cane into optical fiber in the direction indicated by the hollow arrow in the figure. An exemplary cane heat source 606b operable to heat cane during a drawing process, such as in a fiber drawing furnace. The optical fiber preform section 602p provides a pressure interface during the fiber drawing process. Before the cane is drawn to fiber, the first cane section 602i is inserted into a glass tube with a similar length to the first cane section 602i, with an inner diameter similar to the diameter of the first cane section 602i, and with an outer diameter much larger than the diameter of the first cane section 602i.

Step D illustrates a resultant step where a first length of optical fiber 602if is drawn from the first cane section 602i. The fiber can be stored on a spool 607. After the fiber is harvested, it can be cleaved by a fourth cleave C4 to remove it from an undrawn section of the first cane section 602i. This undrawn section can also be cleaved by a fifth cleave C5 to leave the pressure interface ready to be reused with other cane sections.

Step E illustrates the second cane section 602ii being joined to the pressure interface. Hollow structures within the second cane section 602ii are aligned with corresponding structures within the optical fiber preform section 602p and should exactly or closely align, especially if the preform section and can were previously drawn from a single section of preform 600. In the figure, a laser 608 is illustrated as being used to join the second cane section 602ii to the optical fiber preform section 602p, however other methods may be used. Additionally, an interface device may be used in between the two sections to facilitate the attachment. Once attached, the second cane section 602ii may be drawn into optical fiber using a process such as that illustrated in step C. This process may be repeated with the third cane section 602iii and any further number of cane sections. Alignment of a section of cane with a pressure interface is most reliable if the cane and pressure interface were previously part of a unitary section of preform, however this is not essential to the use of a pressure interface as described herein.

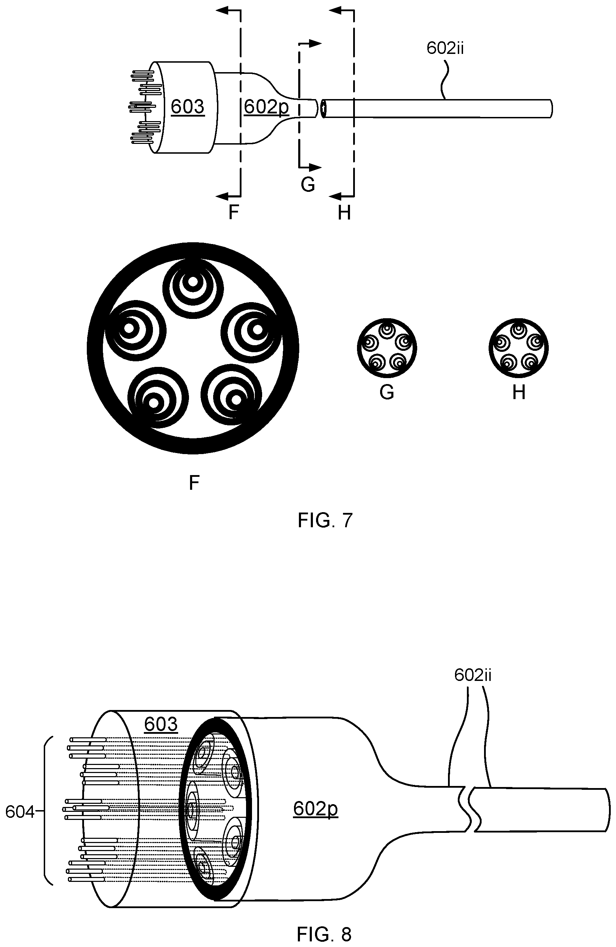

FIG. 7 illustrates cross sections of a pressure interface and cane, such as that described in relation to FIG. 6, that is to be attached to the pressure interface. Cross-section F illustrates a preform cross section that was drawn to a cane-sized cross section, illustrated by cross section G. Cross section H of a cane to be joined to the pressure interface matches cross section G so can be readily joined in a manner such as splicing. The relevant internal structures can be readily aligned by either a manual or automated process.

FIG. 8 illustrates a pressure interface with attached cane section. Conduits 604 pass through the seal 603 and engage with hollow parts of the preform section 602p for pressurizing cane. In the figures, conduits 603 are illustrated as being parallel, but in other examples some or all may be non-parallel to facilitate connections thereto. In other examples, the seal 603 is differently shaped and may be mechanically fastened to the preform section 602p. Each conduit that corresponds to a pressurization point 504 of an inner capillary 404 may be grouped and connected to a single pressure source. Each conduit that corresponds to a pressurization point 506 of a middle capillary 406 may be grouped and connected to a single pressure source. Each conduit that corresponds to a pressurization point 508 of an outer capillary 408 may be grouped and connected to a single pressure source. The lengths of respective conduits extending from a seal 603 may differ facilitating connections to different pressure sources, for example, grouped conduits in fluid communication with inner 404, middle 406 and outer 408 capillaries may extend different lengths.

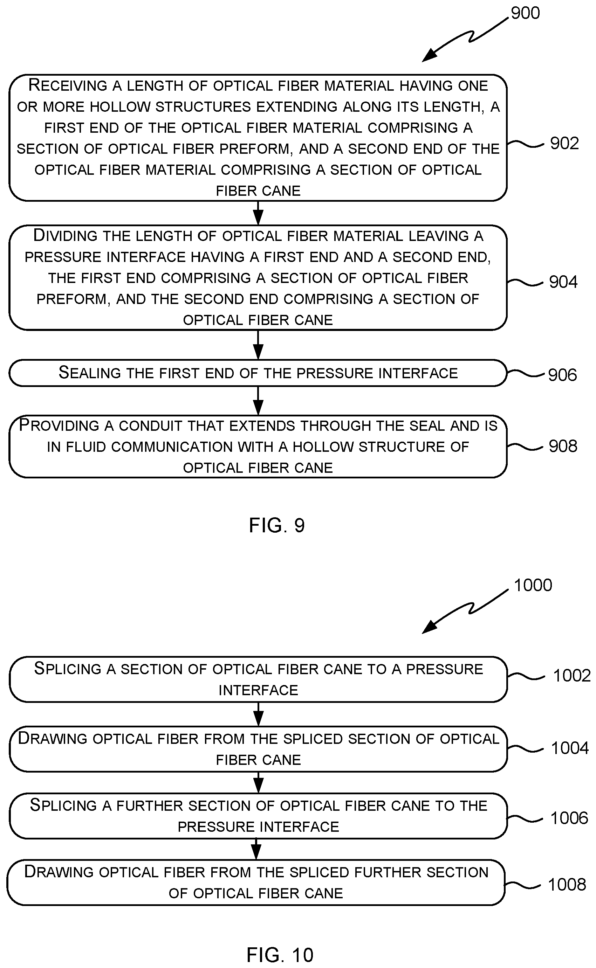

FIG. 9 illustrates a flowchart of a method 900 for manufacturing a pressure interface, such as that illustrated in FIG. 8.

At block 902, a length of optical fiber material is received. The optical fiber material having one or more hollow structures extending along its length. The hollow structures may be capillaries, nested capillaries and/or any other resonating structure. A first end of the optical fiber material comprising a section of optical fiber preform such as the optical fiber preform section 602p illustrated in FIG. 6 step B, and a second end of the optical fiber material comprising a section of optical fiber cane such as the cane section 602c illustrated in FIG. 6 step B.

At block 904, the length of optical fiber material is divided leaving a pressure interface having a first end and a second end. The first end comprising a section of optical fiber preform, and the second end comprising a section of optical fiber cane. This block corresponds to the cleaves C1, C2, C2 of FIG. 6 step C.

At block 906, the first end of the pressure interface is sealed by, for example, seal 603 of FIG. 6 step C.

At block 908, a conduit is provided that extends through the seal and is in fluid communication with a hollow structure of optical fiber cane. The conduit may be a one of the conduits 604 illustrated in FIG. 6 step C. Pressurized fluid/gas may be provided via the conduit to the hollow structure during a drawing process to draw optical fiber from the cane, such as the process illustrated in FIG. 6 step C that provide the length of optical fiber 602if illustrated in FIG. 6 step D. Blocks of the FIG. 9 may be repeated to provide additional lengths of optical fiber from additional lengths of cane on the same pressure interface, such a process is illustrated by the method 1000 of FIG. 10.

FIG. 10 illustrates a flowchart of a method 1000 for using a pressure interface.

At block 1002, a section of optical fiber cane is joined to a pressure interface, such as the pressure interface manufactured using the method 900 of FIG. 9.

At block 1004, optical fiber is drawn from the joined section of optical fiber cane. The drawn fiber may then be removed and stored by using a method such as that illustrated in illustrated in FIG. 6 step D. The cane end from which fiber has been drawn is re-cleaved prior to joining with a further cane section.

At block 1006, a further section of optical fiber cane is joined to the pressure interface by using a method such as that illustrated in illustrated in FIG. 6 step E. One or more hollow structures extending along the pressure interface may be aligned and joined with one or more hollow structures extending along the section of optical fiber cane.

At block 1008, optical fiber is drawn from the joined further section of optical fiber cane by using a method such as that illustrated in illustrated in FIG. 6 step C.

Alternatively or in addition to the other examples described herein, examples include any combination of the following:
Clause A. A hollow core optical fiber cane pressure interface comprised of optical fiber material, the pressure interface comprising: a first end and a second end, the first end comprising a section of optical fiber preform, and the second end comprising a section of optical fiber cane; and a plurality of capillaries extending from the first end to the second end of the pressure interface.
Clause B. The pressure interface of clause A, wherein the second end has a reduced cross section compared to the first end.
Clause C. The pressure interface of any preceding clause, wherein two or more of the plurality of capillaries are nested.
Clause D. The pressure interface of any preceding clause, wherein the pressure interface is joined to a section of optical fiber cane.
Clause E. The pressure interface of clause D, wherein the joined section of optical fiber cane was previously drawn from the optical fiber preform of the pressure interface first end.
Clause F. The pressure interface of clause D or clause E further comprising a section of optical fiber drawn from the joined section of optical fiber cane.
Clause G. The pressure interface of any preceding clause further comprising a seal at the pressure interface first end.
Clause H. The pressure interface of clause G further comprising a plurality of conduits extending through the seal, wherein one of the plurality of conduits is in fluid communication with one of the plurality of capillaries.
Clause I. The pressure interface of clause G or clause H further comprising a hollow extending between the pressure interface first end and second end, the hollow section not being a capillary; wherein another conduit of the plurality of conduits extends through the seal and is in fluid communication with the pressure interface hollow section.
Clause J. A method of manufacturing a hollow core optical fiber cane pressure interface, the method comprising: receiving a length of hollow core optical fiber material, the optical fiber material having a plurality of capillaries extending along its length, a first end of the optical fiber material comprising a section of optical fiber preform, and a second end of the optical fiber material comprising a section of optical fiber cane; and dividing the length of optical fiber material leaving a pressure interface having a first end and a second end, the first end comprising a section of optical fiber preform, and the second end comprising a section of optical fiber cane.
Clause K. The method of clause J, wherein the pressure interface second has a reduced cross section compared to the pressure interface first end.
Clause L. The method of clause J or clause K, wherein two or more of the plurality of capillaries are nested.
Clause M. The method of any of clause J to L further comprising joining a section of optical fiber cane to the pressure interface.
Clause N. The method of clause M, wherein joined section of optical fiber cane was previously drawn from the optical fiber preform of the pressure interface first end.
Clause O. The method of clause M or clause N further comprising drawing optical fiber from the joined section of optical fiber cane.
Clause P. The method of clause O further comprising dividing the drawn optical fiber from the pressure interface; and joining a second section of optical fiber cane to the pressure interface second end, the joined second section of optical fiber cane being previously drawn from the optical fiber preform of the pressure interface first end.
Clause Q. The method of clause P further comprising drawing optical fiber from the joined second section of optical fiber cane.
Clause R. The method of any of clauses J to Q further comprising: sealing the first end of the pressure interface.
Clause S. The method of clause R further comprising providing a plurality of conduits that extend through the seal, wherein one of the plurality of conduits is in fluid communication with one of the plurality of capillaries.
Clause T. The method of clause R or clause S, wherein the pressure interface further comprises a hollow section extending from the first end to the second end of the of the pressure interface, the hollow section not being a capillary, and the method further comprises providing another conduit of the plurality of conduits that extends through the seal and is in fluid communication with the hollow section.
Clause U. The method of clause S or clause T further comprising providing pressurized gas or fluid through the plurality of conduits.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements. The term 'subset' is used herein to refer to a proper subset such that a subset of a set does not comprise all the elements of the set (i.e. at least one of the elements of the set is missing from the subset).

Additionally, as used in this disclosure, phrases of the form "at least one of an A, a B, or a C," "at least one of A, B, and C," and the like, should be interpreted to select at least one from the group that comprises "A, B, and C." Unless explicitly stated otherwise in connection with a particular instance in this disclosure, this manner of phrasing does not mean "at least one of A, at least one of B, and at least one of C." As used in this disclosure, the example "at least one of an A, a B, or a C," would cover any of the following selections: {A}, {B}, {C}, {A, B}, {A, C}, {B, C}, and {A, B, C}.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. A hollow core optical fiber cane pressure interface comprised of optical fiber material, the pressure interface comprising:
a first end and a second end, the first end comprising a section of optical fiber preform (602p), and the second end comprising a section of optical fiber cane (602c); and
a plurality of capillaries (404, 406, 408) extending from the first end to the second end of the pressure interface.

2. The pressure interface of claim 1, wherein the second end has a reduced cross section compared to the first end.

3. The pressure interface of any preceding claim, wherein two or more of the plurality of capillaries are nested.

4. The pressure interface of any preceding claim, wherein the pressure interface is joined to a section of optical fiber cane (602i).

5. The pressure interface of claim 4, wherein the joined section of optical fiber cane was previously drawn from the optical fiber preform of the pressure interface first end.

6. The pressure interface of claim 4 or claim 5 further comprising a section of optical fiber (602ii) drawn from the joined section of optical fiber cane.

7. The pressure interface of any preceding claim further comprising a seal (603) at the pressure interface first end.

8. The pressure interface of claim 7 further comprising a plurality of conduits (604) extending through the seal, wherein one of the plurality of conduits is in fluid communication with one of the plurality of capillaries.

9. The pressure interface of claim 7 or claim 8 further comprising a hollow (410) extending between the pressure interface first end and second end, the hollow section not being a capillary; wherein another conduit of the plurality of conduits extends through the seal and is in fluid communication with the pressure interface hollow section.

10. A method (900) of manufacturing a hollow core optical fiber cane pressure interface, the method comprising:
receiving (902) a length of hollow core optical fiber material, the optical fiber material having a plurality of capillaries extending along its length, a first end of the optical fiber material comprising a section of optical fiber preform, and a second end of the optical fiber material comprising a section of optical fiber cane; and
dividing (904) the length of optical fiber material leaving a pressure interface having a first end and a second end, the first end comprising a section of optical fiber preform, and the second end comprising a section of optical fiber cane.

11. The method of any of claim 10 further comprising: joining a section of optical fiber cane to the pressure interface.

12. The method of claim 11, wherein joined section of optical fiber cane was previously drawn from the optical fiber preform of the pressure interface first end.

13. The method of claim 11 or claim 12 further comprising:
drawing optical fiber from the joined section of optical fiber cane;
dividing the drawn optical fiber from the pressure interface; and
joining a second section of optical fiber cane to the pressure interface second end, the joined second section of optical fiber cane being previously drawn from the optical fiber preform of the pressure interface first end.

14. The method of any of claims 10 to 13 further comprising: sealing (906) the first end of the pressure interface; and providing a plurality of conduits (908) that extend through the seal, wherein one of the plurality of conduits is in fluid communication with one of the plurality of capillaries.

15. The method of claim 14, wherein the pressure interface further comprises a hollow section extending from the first end to the second end of the of the pressure interface, the hollow section not being a capillary, and the method further comprises:
providing another conduit of the plurality of conduits that extends through the seal and is in fluid communication with the hollow section.
